# EUROPEAN PATENT APPLICATION

(11) **EP 4 844 138 A1**
(43) Date of publication of application: **25.11.2026**
(21) Application number: 25741986.1
(22) Date of filing: 16.01.2025
(51) Int. Cl.: E02F 3/43, E02F 9/22, E02F 9/26

(54) **WORK MACHINE**

(30) Priority: 16.01.2024 JP 2024004600
(71) Applicant: Hitachi Construction Machinery Co., Ltd., Tokyo 110-0015 (JP)
(72) Inventor: SUZUKI, Yusuke, Tsuchiura-shi, Ibaraki 300-0013 (JP); KUMAGAI, Kento, Tsuchiura-shi, Ibaraki 300-0013 (JP); IZAWA, Kei, Tsuchiura-shi, Ibaraki 300-0013 (JP); AMANO, Hiroaki, Tsuchiura-shi, Ibaraki 300-0013 (JP); SHIRATO, Shuu, Tsuchiura-shi, Ibaraki 300-0013 (JP)
(74) Representative: MERH-IP Matias Erny Reichl Hoffmann Patentanwälte PartG mbB
(86) International application number: PCT/JP2025/001173
(87) International publication number: WO 2025/154761

(57) **Abstract**

A work machine includes a controller that calculates motion command values for actuators so that a bucket follows a target surface based on a required operation direction calculated from an operation input amount and posture, and a drive device that drives the actuators based on the motion command values. The controller sets a plurality of candidates for a bucket line-a line segment defined at an end of the bucket-calculates a positional relationship between the candidates and the target surface using at least one of a distance and a relative angle, and selects, based on the positional relationship and the operation input amount, a bucket line corresponding to required excavation work. The motion command value for the bucket is then corrected so that an angle between the selected bucket line and the target surface is reduced. In this way, the operator's work efficiency is improved by controlling a bucket angle to an appropriate working posture according to a work content.

## Description

### Technical Field

The present invention relates to a work machine equipped with a multi joint type work front.

### Background Art

It is known that a work machine used in civil engineering includes a machine body having a swing body swingably mounted on an upper portion of a travel body driven by a power system, and a multi joint type work front swingably mounted in a vertical direction, with each member of the work front driven by a cylinder. One example is a hydraulic excavator in which the work front is composed of a boom, an arm, a bucket, and the like. In this type of hydraulic excavator, a target surface to be excavated is preset, and so called machine control is performed to automatically control boom and bucket motions according to an operation input amount of an operator's arm motion, allowing the bucket to excavate along the target surface. In particular, there is so called bucket angle control, which controls bucket motion so that the bucket is at a predetermined angle relative to the target surface.

However, in bucket angle control, if the bucket angle is controlled into a state different from the operator's intended working posture, such control may cause discomfort to the operator and may reduce work efficiency.

For example, Patent Document 1 discloses a work machine equipped with an operation determination unit that determines the operation/non operation state of the bucket based on an operation input amount by the operator, a bucket control determination unit that determines whether the bucket control conditions are met based on the determination of the non operation state, and a work machine control unit that outputs a control signal to control the bucket so that a state of the work machine is maintained when it is determined that the bucket control conditions are met, thereby starting control of the bucket angle at an appropriate timing.

### Prior Art Document

### Patent Document

Patent Document 1 WO 2017/086488

### Summary of the Invention

### Problems to be Solved by the Invention

In hydraulic excavators, a working posture of the bucket required by the operator changes depending on the work content, such as excavating with a tip of the bucket parallel to the target surface, shaping work with a rear end of a bucket bottom parallel to the target surface, or excavating with a side cutter of the bucket parallel to an excavation wall.

In contrast, in the above conventional technology, the operator needs to perform delicate lever operations to adjust a bucket angle so that the bucket assumes an appropriate working posture before the control to keep the bucket angle constant is activated.

Machine control requires that excavation work can be performed as intended by the operator with simple lever operations, but in the above conventional technology, delicate lever operations are required from the operator, which may reduce work efficiency.

The present invention has been made in view of the above, and aims to provide a work machine that can improve an operator's work efficiency by controlling a bucket angle to an appropriate working posture according to the work content.

### Means for Solving the Problems

This application provides a plurality of means for solving the above problems. In one example, a work machine includes: a travel body; an upper swing body swingably provided with respect to the travel body; a work implement having at least a bucket and swingable in a vertical direction with respect to the upper swing body; actuator respectively driving the upper swing body and the work implement; an operation device for operating the actuator; an operation amount detection device configured to detect an operation input amount of the operation device; a posture detection device configured to detect a posture of the upper swing body and the work implement; a target surface setting device configured to set a target surface to be excavated by the bucket; a controller configured to calculate a required motion direction for the bucket based on the operation input amount detected by the operation amount detection device and the posture detected by the posture detection device, and to calculate a motion command value of the actuator so that the bucket follows the target surface based on the required motion direction; and a drive device configured to drive the actuator based on the motion command value calculated by the controller. The controller includes: a bucket line setting section configured to set a plurality of candidates for a bucket line, the bucket line being a line segment defined at an end of the bucket; a bucket line calculation section configured to calculate a positional relationship between the plurality of candidates for the bucket line and the target surface using at least one of a distance and a relative angle; a required bucket line selection section configured to select, from among the plurality of candidates for the bucket line, a bucket line corresponding to required excavation work based on the positional relationship and the operation input amount; and a motion command value correction section configured to correct a motion command value of the bucket so that an angle between the selected bucket line and the target surface is reduced.

### Advantages of the Invention

According to the present invention, an operator's work efficiency can be improved by controlling a bucket angle to an appropriate working posture in line with the operator's intent.

### Brief Description of the Drawings

[FIG. 1] Diagram showing a state of work by a hydraulic excavator, which is an example of a work machine.
[FIG. 2] Schematic side view showing an overall configuration of a hydraulic excavator, which is an example of a work machine.
[FIG. 3] Diagram showing a controller extracted with related configurations.
[FIG. 4] Functional block diagram showing processing performed by the controller.
[FIG. 5] Diagram schematically showing an examples of typical bucket lines.
[FIG. 6] Diagram explaining an operator's required motion for the bucket in excavation work using machine control.
[FIG. 7] Diagram explaining an operator's required motion for the bucket in excavation work using machine control.
[FIG. 8] Diagram explaining an operator's required motion for the bucket in excavation work using machine control.
[FIG. 9] Diagram explaining a calculation method of a distance and a relative angle of a bucket line with respect to a target surface.
[FIG. 10] Diagram explaining a calculation method of a distance and a relative angle of a bucket line with respect to a target surface.
[FIG. 11] Flowchart showing processing performed by the controller.
[FIG. 12] Flowchart showing a modification example of processing performed by the controller.

### Modes for Carrying Out the Invention

Hereinafter, an embodiment of the present invention will be described with reference to the drawings.

### < Configuration of Work Machine>

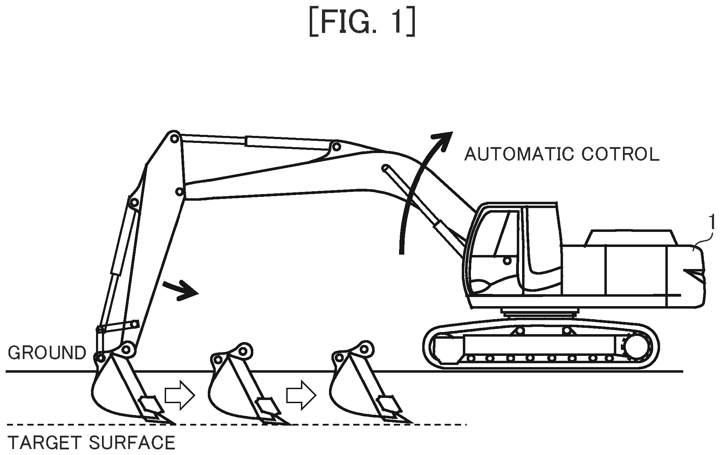

FIG. 1 is a diagram showing a state of work by a hydraulic excavator, which is an example of a work machine of this embodiment.

As shown in FIG. 1, a target system of this embodiment is composed of the work machine 1 and a target surface. The target surface may be a so-called 2D target surface with information only in the longitudinal direction of the work machine 1, or a so-called 3D target surface with information in both the longitudinal and lateral directions. Furthermore, the target surface may be set relative to the work machine 1, or it may be set in a global coordinate system based on the construction site or the earth. In addition, the target surface may be set not only below the work machine 1 but also to the side, front, or rear.

### <Configuration of the Device>

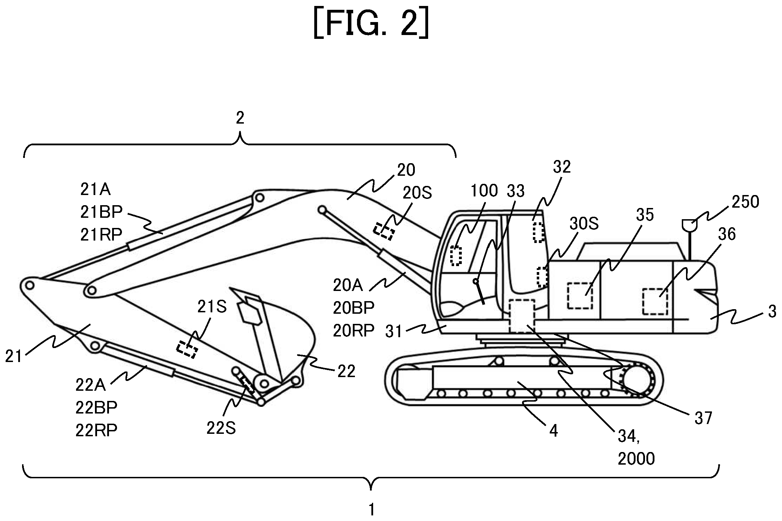

FIG. 2 is a schematic side view showing the overall configuration of a hydraulic excavator, which is an example of the work machine of this embodiment.

As shown in FIG. 2, the work machine 1 includes a work front 2 (work implement), a swing body 3 (upper swing body), and a travel body 4. The swing body 3, together with the travel body 4, constitutes the work machine body.

The work front 2 is configured to rotatably provided about a connection part with respect to the swing body 3, and the swing body 3 is configured to swingably provided about the connection part with respect to the travel body 4. The work front 2 includes a boom 20 with one end connected to the swing body 3, an arm 21 with one end connected to the boom 20, a bucket 22 with one end connected to the arm 21, a boom cylinder 20A with both ends connected to the boom 20 and the swing body 3, an arm cylinder 21A connected to the arm 21 and the boom 20, a link A22B, a link B22C, and a bucket cylinder 22A connected to the link B22C and the arm 21. These members are configured to rotatably provided in the vertical direction (i.e., swingably) about their respective connection parts. The travel body 4 includes a travel motor 41 and a track 45.

The boom cylinder 20A, arm cylinder 21A, and bucket cylinder 22A, which are actuators for driving the work front 2, are structured to extend and retract by hydraulic pressure, thereby rotating the boom 20, arm 21, and bucket 22, respectively. The bucket 22 may be replaced with attachments not shown, such as a grapple, a breaker, a ripper, a magnet, or a bucket with a rotary tilt function.

The boom 20 and the arm 21 are respectively equipped with an IMU (Inertial Measurement Unit) (boom) 20S and IMU (arm) 21S for detecting the posture of the boom 20 and arm 21. The link A22B is equipped with an IMU (bucket) 22S for detecting the posture of the bucket 22. Thus, the IMU (boom) 20S, IMU (arm) 21S, and IMU (bucket) 22S constitute a posture detection device for detecting the posture of the work front 2 (work implement). The IMU (boom) 20S, IMU (arm) 21S, and IMU (bucket) 22S are each composed of an angular velocity sensor and an acceleration sensor.

The boom cylinder 20A is equipped with a pressure sensor (boom rod) 20RP and a pressure sensor (boom bottom) 20BP for detecting load. The arm cylinder 21A is equipped with a pressure sensor (arm rod) 21RP and a pressure sensor (arm bottom) 21BP for detecting load. The bucket cylinder 22A is equipped with a pressure sensor (bucket rod) 22RP and a pressure sensor (bucket bottom) 22BP for detecting load.

The swing body 3 is equipped with a swing angle sensor 2S, an IMU (swing body) 30S, a main frame 31, an operating cabin 32, a controller 34, a drive device 35, a power unit (prime mover) 36, a swing load measuring device 37, and a position measuring device 250.

The swing angle sensor 2S is mounted to detect the relative angle between the travel body 4 and the swing body 3.

The IMU (swing body) 30S is equipped with an acceleration sensor and an angular velocity sensor, and is mounted to detect the tilt angle of the swing body 3. That is, the IMU (swing body) 30S constitutes a posture detection device that detects the posture of the swing body 3 (upper swing body).

The operating cabin 32 is equipped with an operation input device 33, a setting input display device 100, and a construction surface management device 2000.

The operation input device 33 includes an operation lever, which is an operation device for operating the actuator, and an operation input amount sensor (operation amount detection device) that detects the amount they are tilted. The operation input amount sensor is mounted to detect the amount the operator tilts the operation lever, thereby converting the target motion of each movable part requested by the operator into an electrical signal.

The construction surface management device 2000 is connected to the setting input display device 100 and is mounted to manage and store the target surface that the work front 2 aims to excavate.

The setting input display device 100 is composed of a display monitor and a touch panel, and is mounted to display a posture of the work machine 1, information on the target surface, and a positional relationship and a distance between the work implement2 and the target surface, and to set various dimensions and a mass of the work implement2.

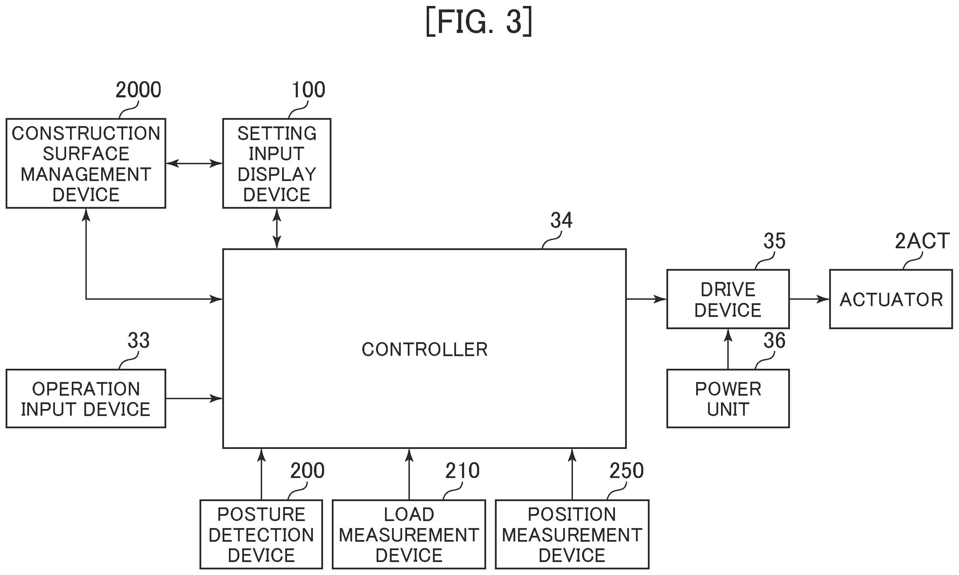

FIG. 3 is a diagram showing the controller extracted along with related configurations.

As shown in FIG. 3, the drive device 35 is composed of an electromagnetic control valve and a directional switching valve, and is mounted to command a motion of the boom cylinder 20A, arm cylinder 21A, and bucket cylinder 22, which are drive actuators, by driving the electromagnetic control valve and directional switching valve according to the motion command value output from the controller 34.

The engine and pump 36 are composed of an engine and a hydraulic pump, and is mounted to generate the hydraulic pressure necessary for operating the work machine 1 as generate hydraulic pressure as a power source .

The swing load measuring device 37 is mounted to measure a load acting in a swing direction of the swing body 3.

The travel body 4 is equipped with tracks, and the operator operates the operation input device 33 to drive the work machine 1. The travel body 4 is not limited to those equipped with tracks, but may also be equipped with travel wheels or legs.

The configuration of the work machine 1 described above is merely an example, and similar devices or configurations may be employed without departing from the scope of the present invention.

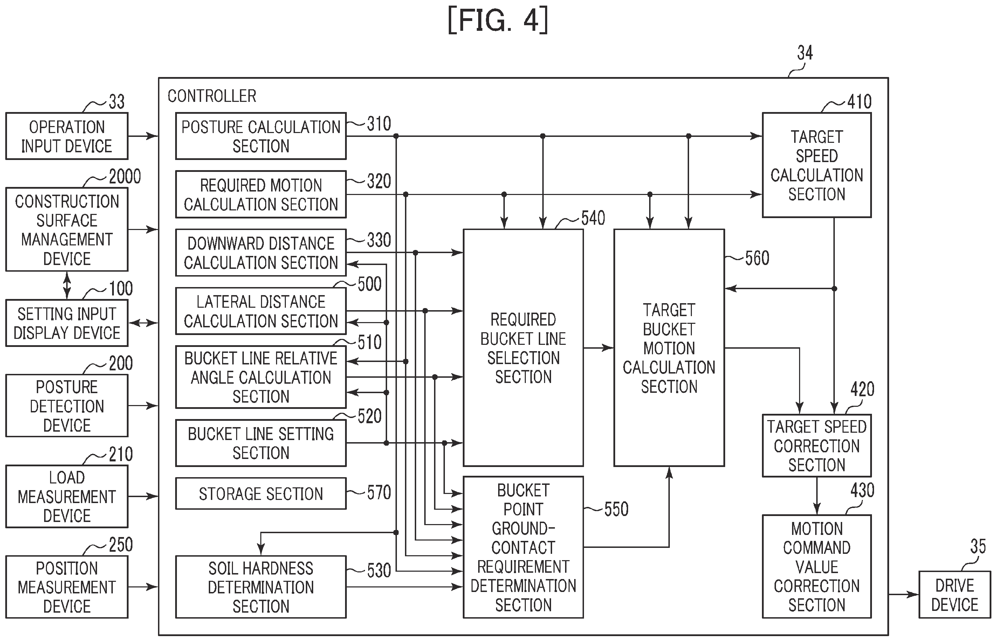

FIG. 4 is a functional block diagram showing the processing content of the controller.

As shown in FIG. 4, the controller 34 provided in the work machine 1 is connected to the operation input device 33, a posture detection device 200, a load measurement device 210, the position measurement device 250, drive device 35, construction surface management device 2000, and setting input display device 100.

The construction surface management device 2000 is connected to the setting input display device 100.

The drive device 35 is connected to the engine and pump 36 and to the actuator 2ACT.

### <Detailed Configuration and Function of the Device>

### <Operation input device 33>

The operation input device 33 includes an operation lever and an operation input amount sensor. The operator's operation amount is converted into an electrical signal by the operation input amount sensor. In hydraulic excavators, it is generally set so that the motion speed of the actuator increases as the amount the lever is tilted increases, and the operator changes the amount the lever is tilted to change the motion speed of each actuator and operate the work machine. The operation input device 33 may be of a hydraulic pilot type or a remote operation type, as long as it has equivalent functions.

### <Posture detection device 200>

The posture detection device 200 is equipped with angular velocity sensors and acceleration sensors in the IMU (swing body) 30S, IMU (boom) 20S, IMU (arm) 21S, and IMU (bucket) 22S, and also includes a swing angle sensor 2S. Posture information of the work machine 1 is obtained from these IMUs and angle sensors. The boom 20, arm 21, bucket 22, boom cylinder 20A, arm cylinder 21A, bucket cylinder 22A, link A22B, link B22C, and swing body 3 are each mounted to be swingable, and based on mechanical linkage relationships, the posture of the boom 20, arm 21, bucket 22, and swing body 3 can be estimated. It should be noted that the posture detection method shown here is an example, and it is possible to directly measure the relative angles of each part of the work front 2 or detect the stroke of the boom cylinder 20A, arm cylinder 21A, and bucket cylinder, 22A to calculate the posture of each part of the work machine 1.

### <Load measurement device 210>

The load measurement device 210 detects the load of each actuator using pressure sensors (boom rod) 20RP, pressure sensors (boom bottom) 20BP, pressure sensors (arm rod) 21RP, pressure sensors (arm bottom) 21BP, pressure sensors (bucket rod) 22RP, pressure sensors (bucket bottom) 22BP, and the swing load measuring device 37, which are respectively mounted on the boom cylinder 20A, arm cylinder 21A, bucket cylinder 22A, and swing body 3. In addition, a load detection device using a load cell may also be used. Furthermore, since the actuator 2ACT, drive device 35, and an engine and pump 36 are connected hydraulically or mechanically, a method of measuring their load to estimate the load of the work machine 1 may also be used.

### <Position measurement device>

The position measurement device includes GNSS (Global Navigation Satellite System), laser positioning meters, and total stations. As long as it can specify the position of the work machine 1, it may be equipped with position measurement devices other than those mentioned above.

### <Drive device 35>

The drive device 35 is composed of an electromagnetic control valve and a directional switching valve, and controls the amount of hydraulic fluid supplied to the cylinders and hydraulic motors that drive each part of the work machine according to the motion command value instructed by the controller 34. The motion command value output from the controller 34 is converted into pilot pressure by the electromagnetic control valve, and the directional switching valve that controls the motion amount of the actuator by pilot pressure is driven. The hydraulic fluid, whose flow rate is adjusted by the directional switching valve, is supplied to the cylinders and hydraulic motors that drive each part of the work machine, thereby driving each movable part. Additionally, by adding or changing the configuration, attachments or equipment not included above can be additionally driven.

### < Engine and Pump 36>

The engine and pump 36 is composed of an engine and a hydraulic pump, and generates the hydraulic pressure necessary for operating the work machine 1 as power. In addition to the above, a motor driven by electricity may also be used to extract hydraulic power.

### <Actuator 2ACT>

The actuator 2ACT is a general term for actuators, including the boom cylinder 20A, arm cylinder 21A, bucket cylinder 22A, swing hydraulic motor, and travel hydraulic motor.

### <Construction surface management device 2000>

The construction surface management device 2000 uses the setting input display device 100 to set and manage the target surface for the work machine 1. The target surface can be set to have a plurality of planes in addition to a single plane, allowing the range that the work front 2 can excavate to be set. The target surface may be set relative to the work machine 1 or in a coordinate system based on the construction site or the earth.

### <Setting input display device 100>

The setting input display device 100 displays the posture of the work machine 1, the area information of the target surface set by the construction surface management device 2000, the distance to the target surface from the work front 2, and other information to the operator.

### < controller 34>

As shown in FIG. 4, the controller 34 is connected to the operation input device 33, construction surface management device 2000, setting input display device 100, posture detection device 200, load measurement device 210, position measurement device 250, and drive device 35, and is composed of a posture calculation section 310, required motion calculation section 320, downward distance calculation section 330, target speed calculation section 410, target speed correction section 420, motion command value correction section 430, lateral distance calculation section 500, bucket line relative angle calculation section 510, bucket line setting section 520, soil hardness determination section 530, required bucket line selection section 540, bucket point ground-contact requirement determination section 550, and target bucket motion calculation section 560.

The posture calculation section 310 calculates the posture of the work machine 1 based on information from the posture detection device 200.

The required motion calculation section 320 calculates the motion direction required for the work machine 1 based on the operation input device 33 and posture information.

The downward distance calculation section 330 calculates the distance to the target surface located below the bucket 22 using the posture and position information of the work machine 1.

The target speed calculation section 410 calculates the target speed of the actuator 2ACT according to the posture information of the work machine 1, target surface distance, and required motion.

The target speed correction section 420 corrects the target speed of the actuator 2ACT based on the calculation result of the target speed calculation section 410, taking into account the judgment result of the target bucket motion calculation section 560.

The motion command value correction section 430 corrects and generates the motion command value for controlling the drive device 35 based on the target speed of the actuator 2ACT corrected by the target speed correction section 420. The corrected motion command value is output to the drive device 35.

The lateral distance calculation section 500 calculates a distance between a bucket line of the bucket 22 and the target surface located laterally, using the posture and position information of the work machine 1, as well as the bucket line information set in the bucket line setting section 520.

The bucket line relative angle calculation section 510 calculates the relative angle between the bucket line set in the bucket line setting section 520 and the target surface.

The bucket line setting section 520 sets a plurality of candidates for the bucket line, which is a line segment at the end of the bucket 22, based on operator input operations and the like.

The soil hardness determination section 530 determines the hardness of the soil excavated by the bucket 22 based on the posture information of the work machine 1 and the load information from the load measuring device 210.

The required bucket line selection section 540 selects the target bucket line requested by the operator from the plurality of candidates set by the bucket line setting section 520, based on the distance between the bucket line and the target surface, the relative angle between the bucket line and the target surface, the operator's required motion, and the posture information of the work machine 1.

The bucket point ground-contact requirement determination section 550 determines whether there is a request from the operator to ground-contact the bucket 22 to the target surface, based on the distance between the bucket line and the target surface, the relative angle between the bucket line and the target surface, the operator's required motion, and the posture information of the work machine 1.

The target bucket motion calculation section 560 calculates the target operation of the bucket 22 based on the calculation results from the required bucket line selection section 540, the bucket point ground-contact requirement determination section 550, the posture calculation section 310, the required motion calculation section 320, and the target speed calculation section 410.

### <Operation and Calculation Method of the Device>

### <Basic Operation of Machine Control>

As shown in FIG. 1, in machine control, the operation of the work machine is controlled based on the operator's operation so such that a work tool of the work machine 1 does not dig beyond the target surface.

For example, when the operator performs a crowd operation on the arm 21 in the state shown in FIG. 1, the boom 20 automatically rises and falls so that he tip of the bucket 22 moves along the target surface. This allows the operator to perform excavation work along the target surface without requiring skilled operation. Furthermore, the motion direction of the swing body 3 is also controlled by machine control to follow the target surface based on the motion of the work front 2 or the operator's operation.

Moreover, when the operator enables control by machine control for the bucket 22, the motion of the bucket 22 is controlled so that its posture relative to the target surface is maintained constant. This allows the operator to perform excavation work with the bucket 22 in a predetermined posture using only the crowd operation of the arm 21, without performing delicate lever operations on the bucket 22. For details on the calculation method of the basic operation of machine control, please refer to patent 6872666 and others.

### <Operator's Required Motion for the Bucket>

The end of the bucket 22 includes a plurality of linear parts, and the operator performs excavation work to make the excavation target smooth by aligning these linear ends with the target surface. In the present invention, these linear ends of the bucket 22 are referred to as bucket lines.

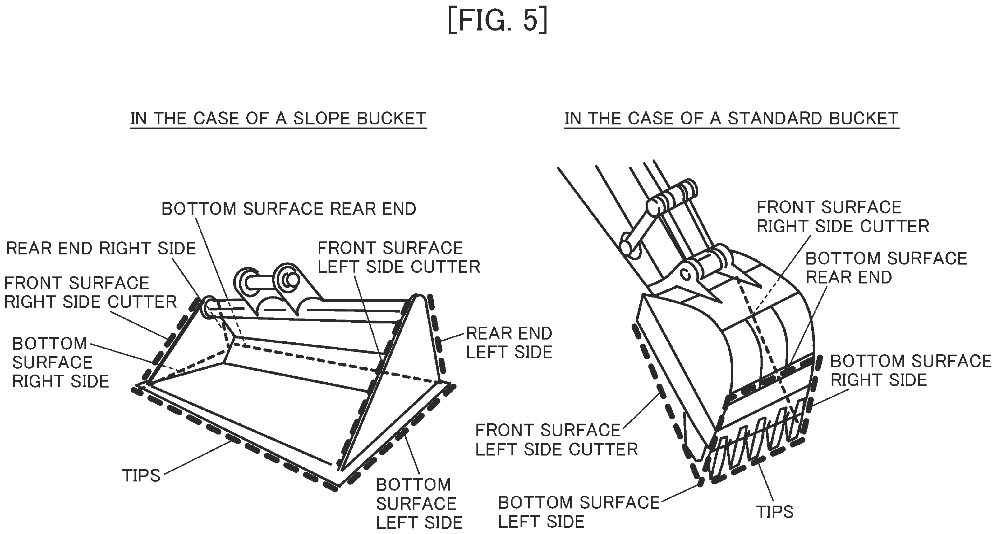

FIG. 5 is a diagram schematically showing an example of a typical bucket line.

As shown in FIG. 5, the bucket line of a standard bucket typically includes a line segments connecting tips of left and right ends of the tips of the bucket teeth (see "tips"), segments connecting the upper portion of the front surface of the bucket and the tips including side cutters on each side (see "front surface left side cutter" and "front surface right side cutter"), a line segment connecting left and right rear ends of the bucket bottom (see "bottom surface rear end"), and segments connecting the tips of the bucket teeth and the rear end of the bucket bottom on each side (see "bottom surface left side" and "bottom surface right side").

The bucket line of a slope bucket includes a segments connecting the tips of the left and right of the bucket (see "tips"), segments connecting the upper portion of the front surface of the bucket and the tips including side cutters on each side (see "front surface left side cutter" and "front surface right side cutter"), a segments connecting the rear ends of the left and right of the bucket bottom (see "bottom surface rear end"), segments connecting the tips of the bucket claws and the rear end of the bucket bottom on each side (see "bottom surface left side" and "bottom surface right side"), and segments connecting the upper portion of the front surface of the bucket and the rear end of the bucket bottom on each side (see "rear end left side" and "rear end right side").

It should be noted that the shape of the bucket 22 varies, and this example is just one instance. Therefore, in this embodiment, the operator can accommodate any shape of bucket by pre-setting the bucket line to the controller 34. Additionally, if there is a bucket line that is not desired to be used, it can be disabled, allowing only the necessary bucket lines to be used.

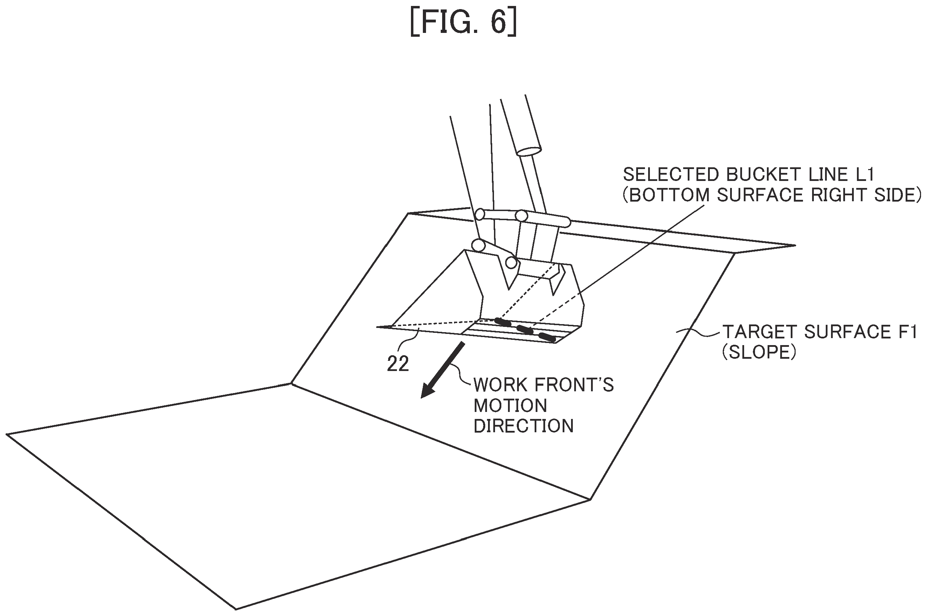

FIGS. 6, 7, and 8 are diagrams explaining the operator's required motion for the bucket in excavation work using machine control.

First, as shown in FIG. 6, in slope excavation work, when working with the work machine 1 parallel to the slope (target surface F1), excavation is performed by combining boom lowering motion, swing motion, and bucket dump motion. At this time, to excavate so that the slope, which is the target surface F1, becomes smooth, a line segment connecting a tip of a right side of the bucket and the rear end of the bucket bottom (see "bottom surface right side" in FIG. 5 ) needs to be parallel to the slope, which is the target surface F1. Therefore, when the bucket 22 is near the target surface F1 and excavates the slope including boom lowering and swing motions, the operator's required motion for the bucket 22 is for the segment connecting the tip of the left side of the bucket and the rear end of the bucket bottom (bucket line L1 selected by the required bucket line selection section 540 described later) to be parallel to the target surface F1.

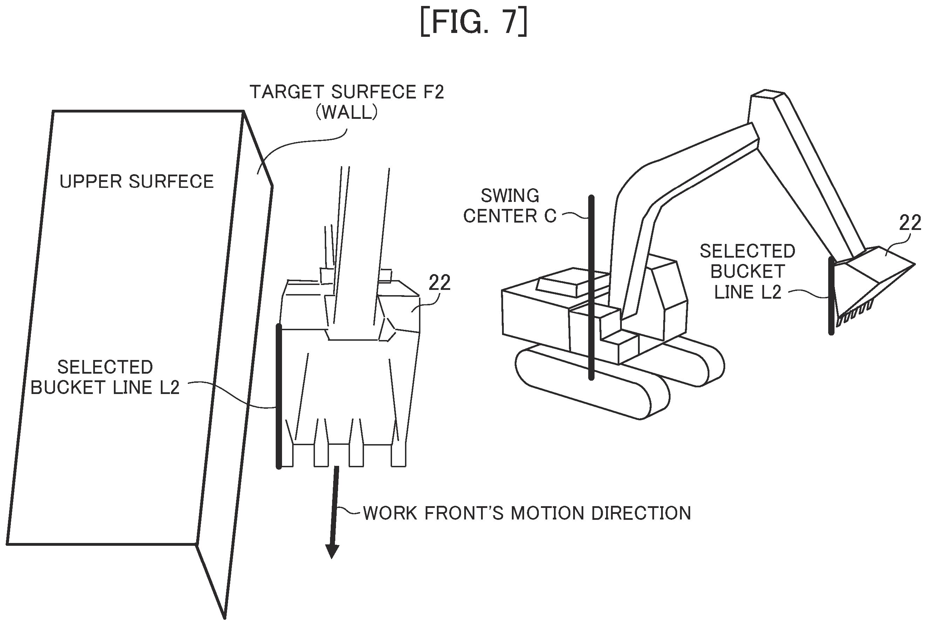

Next, as shown in FIG. 7, in wall excavation work such as trenches, when working with the work machine 1 parallel to the trench, excavation is performed by combining arm crowd operation, boom raising operation, left swing operation, and bucket dump operation. At this time, a line segment connecting the upper portion of the front surface of the bucket 22 and the tips including the side cutter on the right side of the bucket needs to be parallel to the trench wall, which is the target surface. Therefore, when the bucket 22 is near the target surface and excavates the trench wall including arm crowd and boom raising motions, the operator's required motion for the bucket 22 is for a line segment connecting the upper portion of the front surface of the bucket and the tips including the side cutter (see "front surface right side cutter" in FIG. 5) on the right side of the bucket (bucket line L2 selected by the required bucket line selection section 540 described later) to be parallel to the target surface. Especially when the trench wall and the arm's motion direction are not parallel, the excavation operation becomes a composite of swing motions, but to continuously excavate the trench wall with a line segment connecting the upper portion of the front surface of the bucket and the tips including the side cutter on the right side of the bucket (bucket line L2), a line segment connecting the upper portion of the front surface of the bucket and the tips including the side cutter on the right side of the bucket (bucket line L2) needs to be parallel to a swing center axis C. Therefore, the operator's required motion for the bucket 22 is to make a line segment connecting the upper portion of the front surface of the bucket and the tips including the side cutter on the right side of the bucket (bucket line L2) parallel to a swing center axis C.

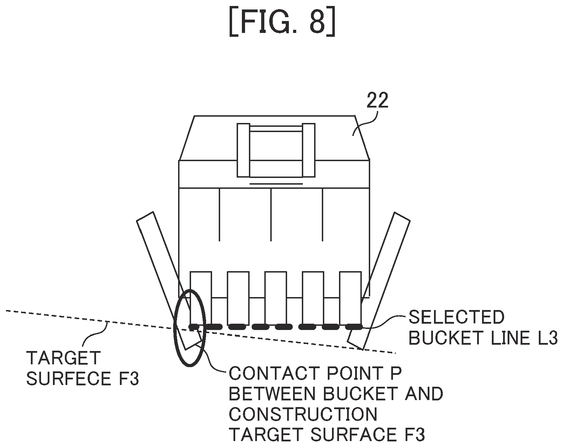

Furthermore, as shown in FIG. 8, when the target surface F3 is inclined relative to a direction in which the boom 20, arm 21, and bucket 22 can move, simply operating the bucket 22 to dump or crowd to change its posture does not make a bucket line at the tips of the bucket (bucket line L3 selected by the required bucket line selection section 540 described later) parallel to the target surface F3. As a result, ground-contact occurs at the contact point P between the bucket 22 and the target surface F3. In such cases where the posture change of the bucket 22 alone cannot make a bucket line L3 parallel to the target surface F3, the operator's required motion for the bucket 22 is for it not to be driven. In other words, the relative angle between the arm 21 and the bucket 22 does not change.

Additionally, when excavating a ground surface with the bucket 22, if the ground being excavated is hard, an excavation force decreases when the bucket 22 contacts the excavation target in a linear or planar manner. In such cases, the operator may increase excavation force by bringing only a right end or a left end of a bucket tooth tip into ground-contact with an excavation target. Therefore, when the excavation target is hard and grounding with the bucket line reduces excavation force, the operator' s required motion for the bucket 22 is to ground-contact it to the target surface.

It should be noted that the above is an example of the operator's required motion for the bucket 22, and the operator changes the required motion for the bucket 22 moment by moment during excavation work according to the shape of the target surface, the positional relationship between the target surface and the work machine 1, and the shape of the bucket 22.

### <Calculation Method of Operator's Required Motion: Required motion calculation section 320>

The operator's required motion for the work machine 1 is calculated as a required motion command value based on the lever operation amount of the operation input device 33 and the posture of the work machine 1, and the resulting motion is obtained by controlling with the calculated required motion command value. The work machine 1 is mechanically connected in its entirety, and the actuator's motion corresponds one-to-one with the lever operated by the operator, so the lever operation amount is acquired as the speed of each actuator, i.e., the required speed. Therefore, for example, it is possible to represent, as a vector, the direction and extent of movement of the tip of the bucket 22 in relation to the amount of lever operation.. The method of expressing vectors is extensively covered in known literature on machine control.

### <Method for calculating the distance and relative angle of the bucket line with respect to the target surface: downward distance calculation section 330, lateral distance calculation section 500, bucket line relative angle calculation section 510>

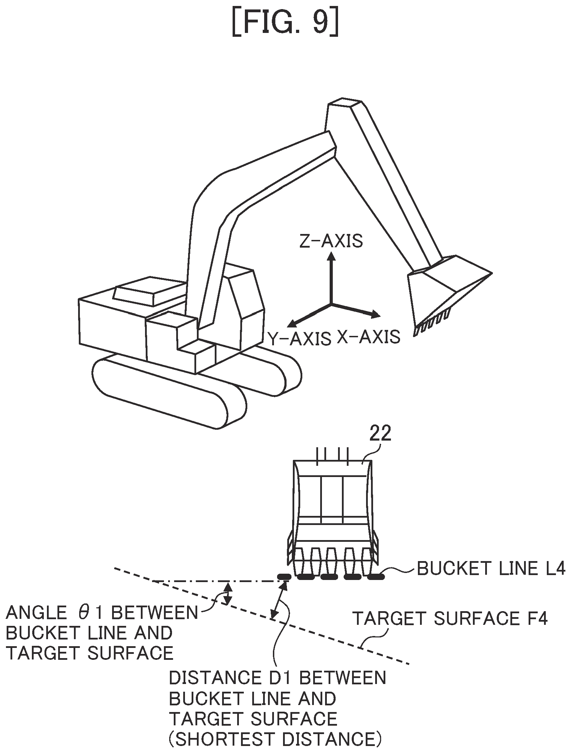

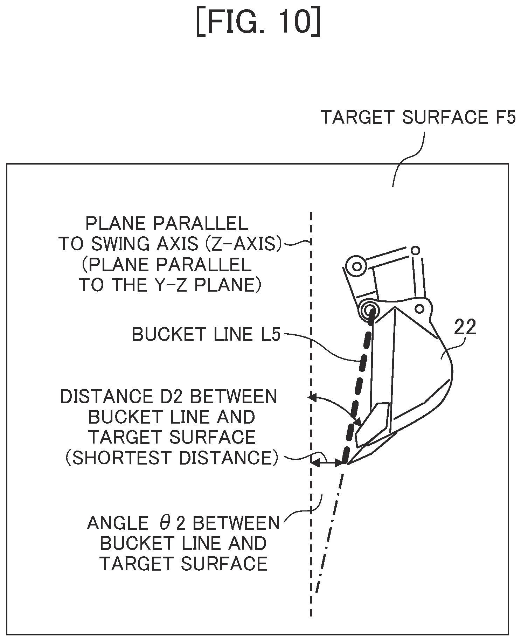

FIGS. 9 and 10 are diagrams explaining the method for calculating the distance and relative angle of the bucket line with respect to the target surface.

As shown in FIG. 9, first, the work machine 1 has an X-axis and a Z-axis that are perpendicular to each other in a direction of motion of the boom 20, arm 21, and bucket 22, based on the boom foot pin, and defines a Y-axis that is orthogonal to them.

When the target surface F4 is located below the bucket 22, one of the angles between the bucket line L4 at the bucket tip and the target surface F4 is an angle θ1 formed when viewed from the Y-Z plane, with the vertex at the intersection of the extended bucket line L4 and the target surface F4. The distance between the bucket line L4 and the target surface F4 is the shortest distance D1 from an endpoint of the bucket line L4 to the target surface F4.

On the other hand, as shown in FIG. 10, when the target surface F5 is located on the front surface side of the bucket 22, and the line segment connecting the upper end of the bucket and the bucket tip is referred to as the bucket line L5, one of the angles between the target surface F5 and the bucket line L5 is the angle θ2 when viewed from the X-Z plane, with the vertex at the intersection of the extended bucket line L5 and the Y-Z plane. The distance between the bucket line L5 and the target surface F5 is the shortest distance D2 from an endpoint of the bucket line L5 to the target surface F5.

In the above, one bucket angle was explained for one bucket line as a representative example, but depending on the positional relationship between the bucket 22 and the target surface, up to three angles can be determined from the X-Y plane, Y-Z plane, and X-Z plane. If a plurality of angles are defined between the bucket line and the target surface, angle information for determination can be predetermined for each work scene, or criteria can be established for all three maximum angles.

### <Method for Selecting Bucket Line Required by Operator: Required Bucket Line Selection Section 540>

First, based on the distance between the target surface and the bucket 22, and the operator's required motion direction for the work front 2 based on lever operation, the operator selects the target surface they wish to follow with machine control. Next, the relative angle of the bucket line to the selected target surface and the distance between the selected target surface and the bucket line are calculated. At this time, the relative angle of the bucket line to the target surface and the distance between the target surface and the bucket line are calculated for a plurality of bucket lines, and the bucket line with the smallest calculated relative angle and the closest distance to the target surface is selected as the bucket line required by the operator. Furthermore, if the specific required motion direction of the operator for the arm 21 or boom 20 is determined, the state of the target surface in the direction of motion of the arm 21 or the boom 20 can be considered, and the bucket line required by the operator can be selected.

Specifically, as shown in FIG. 6, when the right side of the bucket bottom surface has a small relative angle with the target surface and is the closest bucket line to the target surface, if boom operation or arm operation is performed in addition to the operator's swing motion, the operator can determine that they want to use the right side of the bucket bottom surface to shape and excavate the slope, which is the target surface, so the bucket line required by the operator can be determined to be the right side of the bucket bottom surface.

### <Method for determining bucket point ground-contact requirement: bucket point ground-contact requirement determination section 550>

As mentioned earlier, if the motion of the bucket 22 alone cannot make the bucket line parallel to the target surface or if the ground surface to be excavated is hard and excavation force needs to be ensured, there may be a desire to make ground-contact between the bucket 22 and the excavation target rather than linear contact by the bucket line.

First, the method for determining when the motion of the bucket 22 cannot make the bucket line parallel to the target surface will be explained. Whether the bucket line can be made parallel to the target surface is determined by calculating the operating range of the bucket 22 from a mechanism model built into the controller. The operating range of the bucket 22 is calculated kinematically from the maximum extension and retraction of the bucket cylinder 22A. Within the calculated operating range of the bucket 22, a bucket line is selected from a plurality of bucket lines, and whether the selected bucket line can be made parallel to the target surface is determined based on the angle between the bucket line and the target surface. If there is no bucket line that can be made parallel to the target surface (i.e., all bucket lines have an angle with the target surface greater than a predetermined angle), and it is determined that the bucket line cannot be made parallel, it is determined that there is a requirement for the operator to make point ground-contact between the bucket 22 and the excavation target. For example, as shown in FIG. 8, if the target surface is inclined relative to the direction in which the boom 20, arm 21, and bucket 22 can move, even if the bucket 22 is operated to dump or crowd, merely changing the posture of the bucket 22 does not reduce the angle between the selected bucket line related to the bucket tip and the target surface to the predetermined angle or less. Therefore, as described above, it is determined that the bucket line cannot be made parallel to the target surface, and there is a requirement for point ground-contact. Here, the predetermined angle refers to an angle set in advance as an allowable value that allows the bucket line and the target surface to be considered parallel, and it is stored in a memory not shown in the figures.

If the ground surface to be excavated is hard and excavation force needs to be ensured, the hardness of the ground surface is assessed, and if the ground surface is hard, it can be determined that there is a requirement for the operator to make point ground-contact between the bucket 22 and the excavation target.

### <Method for Determining Soil Hardness: Soil hardness determination section 530>

The method for determining soil hardness involves an excavation reaction force of the bucket 22 from the pressure sensors attached to the work front 2 and the posture of the work front 2. As a determination method, known techniques (e.g., International Publication No. 2020/049623) can be used.

### <Method for Calculating Target bucket motion: Target Bucket Motion Calculation Section 560>

A method for calculating a target backet motion will be explained. First, when the bucket 22 reaches a predetermined distance from the target surface, bucket angle control by machine control for the bucket 22 becomes effective. Next, as mentioned earlier, the required motion direction of the operator is calculated, and the bucket line required by the operator is selected. Then, it is determined whether there is a bucket point ground-contact requirement. If a bucket point ground-contact requirement is requested, the target motion is calculated so as not to drive the bucket 22. In other words, the target speed of the bucket is set to zero to maintain the relative angle between the bucket 22 and the arm 21. On the other hand, if there is no bucket point ground-contact requirement, when the selected bucket line is within a predetermined distance and a predetermined relative angle to the target surface, the target motion is to drive the bucket 22 so that the selected bucket line becomes parallel to the target surface. For calculating the target speed of the bucket 22, general PID control (Proportional Integral Differential Controller) can be executed for the error in the relative angle between the bucket line and the target surface, or pre designed table values can be used. If the operator is performing manual operation on the bucket 22, the target motion by the operator's manual operation can be prioritized, or the target motion by the operator's manual operation can be compared with the aforementioned target motion of the bucket 22, and the larger value of the motion speed in the motion direction can be prioritized.

Additionally, depending on the positional relationship between the bucket line and the target surface, there may be a plurality of postures of the bucket 22 where the bucket line and the target surface are parallel. In this case, the posture of the bucket 22 with the least amount of change from the current posture is set as the target posture.

### <Control Procedure>

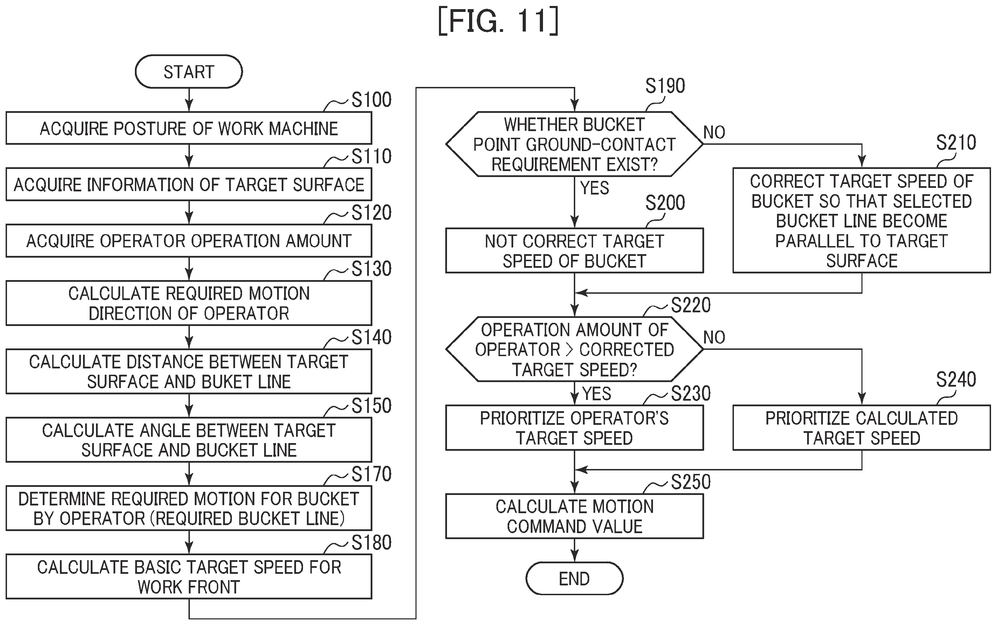

FIG. 11 is a flowchart showing the processing content of the controller.

As shown in FIG. 11, first, the controller acquires and calculates the posture of the work machine (step S100), acquires information on the target surface (step S110), acquires an operator operation amount (step S120), calculates the required motion direction of the operator from the posture of the work machine and an operator operation amount (step S130), calculates the distance between the target surface and the bucket line (step S140), calculates the relative angle between the target surface and the bucket line (step S150), determines the required motion for the bucket by the operator (in other words, selects the required bucket line) (step S170), and calculates the target speed for basic machine control for the work front (step S180).

Here, whether a bucket point ground-contact requirement exists is determined based on whether the angle between the bucket line and the target surface is greater than a predetermined angle (step S190).

If the determination result in step S190 is YES, that is, if the angle between the bucket line and the target surface is greater than the predetermined angle (if there is a point ground-contact requirement), the target speed of the bucket is not corrected (step S200).

Also, if the determination result in step S190 is NO, that is, if there is no point ground-contact requirement, the target speed of the bucket is calculated and corrected so that the selected bucket line becomes parallel to the target surface (step S210).

After the processing of step S200 or S210 is completed, the target speed calculated from the operator's operation amount for the bucket is compared with the target speed of the bucket calculated in step S180 or S210, and it is determined whether the target speed calculated from the operator's operation amount for the bucket (see step S180) is greater than the corrected target speed (see step S210) (step S220).

If the determination result in step S220 is YES, that is, if the target speed calculated from the operator's bucket operation amount (see step S180) is greater than the corrected target speed (see step S210), the target speed of the bucket is set to the target speed calculated from the operator's bucket operation amount (step S230).

If the determination result in step S220 is NO, the target speed of the bucket is set to the corrected target speed of the bucket (see step S210) (step S240).

Once the processing of step S230 or S240 is completed, a motion command value is calculated according to the set target speed of the bucket (step S250), and the process is terminated.

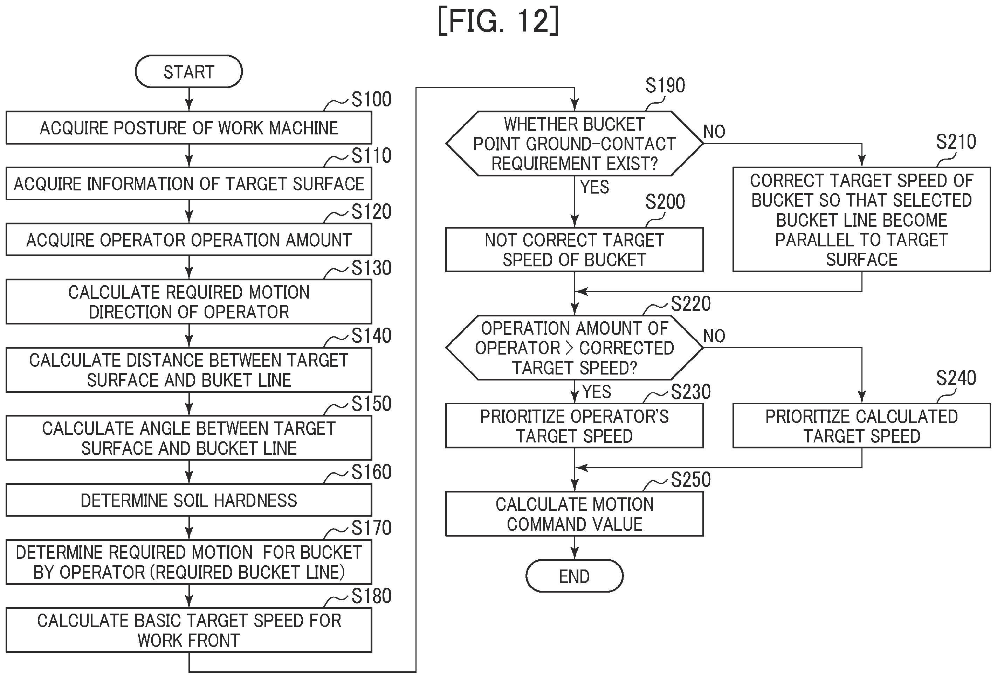

Instead of the flowchart of the embodiment shown in FIG. 11 described above, a step S160 for determining soil hardness may be added between step S150 and step S170 in FIG. 11, as in the modification example shown in FIG. 12. In step S190 of the modification example shown in FIG. 12, it is determined that there is a point ground-contact requirement (YES) if the soil hardness is judged to be hard based on the excavation reaction force of the bucket 22, and it is determined that there is no point ground-contact requirement (NO) if the soil hardness is judged to be soft based on the excavation reaction force of the bucket 22. The rest is the same as the flowchart in FIG. 11.

### <Effects of the Present Embodiment>

As described above, according to this embodiment, a bucket line is set with respect to the linear end of the bucket, and based on the distance and relative angle between the target surface and the bucket line, the operator's intended bucket motion is determined, and the bucket motion is controlled so that the target surface and the bucket line become parallel according to the operator's intended bucket motion, or the bucket motion is controlled so that the target surface and the bucket line achieve point ground-contact. This allows the operator to implement the intended bucket working posture and bucket work, thereby improving the work efficiency of the work machine.

### <Others>

It should be noted that the present invention is not limited to the above embodiments, and various modifications within the scope not departing from the gist thereof are included. For example, the present invention is not limited to those having all the configurations described in the above embodiments, and also includes those with some of the configurations deleted. It is also possible to add or replace some of the configurations of one embodiment with configurations of other embodiments. Furthermore, each configuration related to the above controller and the functions and execution processes of each configuration may be realized in hardware (for example, designing logic for executing each function in an integrated circuit) in whole or in part. Moreover, the configuration related to the above controller may be a program (software) in which each function related to the configuration of the controller is realized by being read and executed by a processing device (e.g., CPU). Information related to the program can be stored in, for example, semiconductor memory (flash memory, SSD, etc.), magnetic storage devices (hard disk drives, etc.), and recording media (magnetic disks, optical disks, etc.).

### Description of Reference Characters

1: Work machine, 2: Work front (work implement), 2ACT: Actuator, 2S: Swing angle sensor, 3: Swing body, 4: Travel body, 20: Boom, 20A: Boom cylinder, 20BP: Pressure sensor (boom bottom), 20RP: Pressure sensor (boom rod), 20S,21S,22S,30S: IMU (Inertial Measurement Unit), 21: Arm, 21A: Arm cylinder, 21BP: Pressure sensor (arm bottom), 21RP: Pressure sensor (arm rod), 22: Bucket, 22A: Bucket cylinder, 22BP: Pressure sensor (bucket bottom), 22RP: Pressure sensor (bucket rod), 31: Main frame, 32: Operating cabin, 33: Operation input device, 34: Controller, 35: Drive device, 36: Power unit (prime mover), 37: Swing load measurement device, 41: Travel motor, 45: Track, 100: Setting input display device, 200:Posture detection device, 210: Load measurement device, 250: Position measurement device, 310: Posture calculation section, 320: Required motion calculation section, 330: Downward distance calculation section, 410: Target speed calculation section, 420: Target speed correction section, 430: Motion command value correction section, 500: Lateral distance calculation section, 510: Bucket line relative angle calculation section, 520: Bucket line setting section, 530: Soil hardness determination section, 540: Required bucket line selection section, 550: Bucket point ground-contact requirement determination section, 560: Target bucket motion calculation section, 2000: Construction surface management device, A22B, B22C: Link

## Claims

1. A work machine, comprising:
a travel body;
an upper swing body swigably provided with respect to the travel body;
a work implement that has at least a bucket and is swingable in a vertical direction with respect to the upper swing body;
an actuator configured to drive each of the upper swing body and the work implement;
an operation device configured to operate the actuators;
an operation amount detection device configured to detect an operation amount of the operation device;
a posture detection device configured to detect a posture of each of the upper swing body and the work implement;
a target surface setting device configured to set a target surface to be excavated by the bucket;
a controller configured to calculate a required motion direction for the bucket based on the operation amount detected by the operation amount detection device and the posture detected by the posture detection device, and calculate a motion command value for the actuators such that the bucket follows the target surface based on the required motion direction; and
a drive device configured to drive the actuator based on the motion command value calculated by the controller,
wherein the controller includes:
a bucket line setting section configured to set a plurality of candidates for a bucket line that is a line segments at an end portion of the bucket;
a bucket line calculation section configured to calculate a positional relationship between each of the plurality of candidates for the bucket lines and the target surface by using at least a distance or a relative angle between each of the plurality of candidates for the bucket line and the target surface;
a required bucket line selection section configured to select a bucket line corresponding to a required excavation work from the plurality of candidates for the bucket line based on the positional relationship and the operation amount; and
a motion command value correction section configured to correct the motion command value for the bucket such that an angle between the bucket line selected by the required bucket line selection section and the target surface becomes smaller.

2. The work machine according to claim 1,
wherein the bucket line setting section is configured to set, as the candidates for the bucket line, candidates for the bucket line including at least one line segments out of
a line segment connecting a tip of a right end and a tip of a left end of the bucket,
a line segment connecting a rear end of the right end and a rear end of the left end of the bucket,
a line segment connecting an upper right end and a lower right end of a front surface of the bucket,
a line segment connecting an upper left end and a lower left end of the front surface of the bucket,
a line segment connecting the tip of the right end and the rear end of the right end of a bottom surface of the bucket,
a line segment connecting the tip of the left end in the bottom surface of the bucket and the rear end of the left end of the bucket,
a line segment connecting an upper portion and a lower portion of the rear end of the right end of the bucket, and
a line segment connecting an upper portion and a lower portion of the rear end of the left end of the bucket.

3. The work machine according to claim 1 or 2,
wherein:
the controller includes
a point ground-contact requirement determination section configured to determine a requirement to bring the bucket and the target surface into ground-contact at point based on the operation amount for the work implement, the target surface, and the posture of the work implement; and
the motion command value correction section is configured to correct the motion command value for the bucket such that a target speed of the actuator configured to drive the bucket becomes zero in a case the point ground-contact requirement determination section determines that there is a point ground-contact requirement between the bucket and the target surface.

4. The work machine according to claim 3,
wherein the point ground-contact requirement determination section is configured to determines whether the target surface and the bucket line are capable of being parallel to each other in a case only the posture of the bucket is changed, and
determine that there is a requirement to bring the bucket line into ground-contact with the target surface at a point in a case it is determined that the target surface and the bucket line are not capable of being parallel to each other.

5. The work machine according to claim 3,
wherein the point ground-contact requirement determination section is configured to determines a hardness of a ground surface to be excavated by the bucket, and
determine that there is a requirement to bring the bucket line into ground-contact with the target surface at a point in a case the ground surface is determined to be hard.

6. The work machine according to claim 1 or 2,
wherein the required bucket line selection section is configured to determines a candidate for the bucket line with a smallest distance or relative angle with respect to the target surface from the candidates for the bucket lines as the bucket line corresponding to the excavation work required by an operator.

7. The work machine according to claim 1 or 2,
wherein when the operation amount includes a swing motion of the upper swing body, the motion command value correction section of the controller corrects the motion command value for the bucket such that the bucket line and a swing center axis of the swing motion of the upper swing body become parallel to each other in a case it is determined that there are a plurality of the postures of the bucket at which the bucket line and the target surface are parallel to each other.

8. The work machine according to claim 1 or 2,
wherein the motion command value correction section of the controller corrects the motion command value for the bucket such that the bucket is placed at a posture with a least amount of displacement in a case it is determined that there are a plurality of the postures of the bucket at which the bucket line and the target surface are parallel to each other.
